# EUROPÄISCHE PATENTANMELDUNG

(11) **EP 1 736 045 A1**
(43) Veröffentlichungstag der Anmeldung: **27.12.2006**
(21) Anmeldenummer: 05014927.7
(22) Anmeldetag: 09.07.2005
(51) Int. Cl.: A01G 9/02

(54) **Pflanzenschale**

(30) Priorität: 23.06.2005 DE 202005009893 U
(71) Anmelder: Leithold, Monika, 79356 Eichstetten (DE)
(72) Erfinder: Leithold, Monika, 79356 Eichstetten (DE)
(74) Vertreter: Ebert, Jutta

(57) **Zusammenfassung**

Die Erfindung betrifft eine Pflanzenschale zur Aufnahme von mehr als einer Pflanze; sie hat ein Seitenwand (2), die sich vom Boden (1) der Pflanzschale geradlinig zu ihrem offenen Rand (3) erstreckt und durch einen deckelartigen Ein- oder Aufsatz (7), der nahe beim Rand (3) gehalten ist und in dem mehrere (mehr als eine) Öffnungen (8) vorgesehen sind, deren Durchmesser zur Aufnahme jeweils eines Pflanztöpfchens (10) bemessen ist. Diese Pflanzenschale eignet sich besonders zum einfachen und schnellen Arrangieren von mehreren Pflanzen Vorzugsweise nach Themen, z.B. von Kräutern nach Rezepten, aber genauso zum Arrangieren von Schmuckpflanzen. Es muss beim Bestücken der Schale nicht mehr zeitraubend mit Erde gearbeitet; so werden auch Verschmutzungen vermieden. Sinnvoll ergänzen lässt sich die Pflanzenschale mit einem Klemm-Untersetzer (25) und einer Haube (20).

## Beschreibung

Die Erfindung bezieht sich auf eine Pflanzenschale zur Aufnahme von mehr als einer Pflanze.

Es sind Pflanzschalen bekannt, in denen mehrere Pflanzen nach Belieben arrangiert werden können, indem die Schale mit Erde gefüllt und jede Pflanze in diese Erde eingepflanzt wird. Dieses Arrangieren und Einpflanzen beansprucht, ganz abgesehen von der Auswahl und dem Zusammenstellen der Pflanzen, viel Zeit und Arbeit. Auch unterliegt man bei der Auswahl und beim Zusammenstellen der Pflanzen durchaus gewissen Beschränkungen, weil nicht alle Pflanzen an ihre unmittelbare Umgebung die gleichen Ansprüche stellen, z.B. unterschiedliche Arten von Erde und/oder unterschiedliche Mengen an Gießware brauchen. Diese Nachteile machen sich besonders bei Gewürzpflanzen bemerkbar, die sehr unterschiedliche Ansprüche haben. Es würde z.B. Sinn machen, Pflanzen allgemein nach Themen, insbesondere Gewürzkräuter nach Kochrezepten zusammenzustellen und so zum Kauf anzubieten. Dies wäre für den Koch oder die Köchin eine große Erleichterung, die sich bis jetzt die einzelnen Gewürzkräuter, die häufig einzeln in kleinen Pflanztöpfchen angeboten werden, selbst aussuchen und zusammenstellen müssen. Vielfach werden Gewürzkräuter auch als Sträußchen oder im Bund angeboten, was gegenüber denen im Pflanztöpfchen natürlich den Nachteil hat, dass die Pflanzen schnell welken, damit ebenso rasch an Qualität verlieren und deshalb möglichst noch am Tag des Schneidens verbraucht werden sollten.

Die bekannten Pflanzschalen haben einen verhältnismäßig kleinflächigen, flachen Boden als Aufstandsfläche und eine sich von dem Boden in einer ausgeprägten Wölbung zum oberen Rand erstreckende Seitenwandung.

Aufgabe der Erfindung ist es, eine Pflanzenschale zu schaffen, in der sich mehrere Pflanzen, die normalerweise einzeln in Pflanztöpfchen angeboten werden, nach Themen, z.B. nach Kochrezepten, in Arbeit und Zeit sparender Weise unter Berücksichtigung ihrer jeweiligen Ansprüche an z.B. Erde oder Gießwasser zusammenstellen und auch pflegen lassen.

Dies wird erfindungsgemäß dadurch erreicht durch eine Seitenwand der Pflanzenschale, die sich von ihrem Boden geradlinig zu ihrem offenen Rand erstreckt und durch einen deckelartigen Ein- oder Aufsatz, der nahe beim Rand gehalten ist und in dem mehrere (mehr als eine) Öffnungen vorgesehen sind, deren Durchmesser zur Aufnahme jeweils eines herkömmlichen Pflanztöpfchens bemessen ist.

Damit können mehrere Pflanzen, die üblicherweise einzeln in ihren Pflanztöpfchen angeboten werden, schnell und einfach Arrangements, z.B. nach Themen oder Speiserezepten, nach Bedarf zusammengestellt werden, ohne dass nochmals eigentliche Pflanzarbeit und dabei Berührung mit Pflanzerde notwendig sind. Die Pflanzen können ebenso schnell ausgetauscht werden, sie können nach ihren jeweiligen Ansprüchen mit der richtigen Erde verbleiben und individuell mit Gießwasser nach Bedarf versorgt werden; sie bleiben länger frisch und appetitlich und können insbesondere als Küchenkräuter erntefrisch verwendet werden.

Wenn die Seitenwand sich rechtwinklig oder in einem vom rechten Winkel nur geringfügig nach außen gerichteten Winkel zum offenen Rand erstreckt, kann der Raum der Pflanzenschale beim Arrangieren mehrerer Pflanztöpfchen gut ausgenutzt werden, ohne dass sie sich gegenseitig behindern.

Vorzugsweise ist unterhalb des Randes ein nach innen weisender Vorsprung vorgesehen ist, der als Auflage für den deckelartigen Einsatz dient.

Der deckelartige Aufsatz kann auch auf dem Rand aufliegen und durch eine Schnappverbindung am Rand fixierbar sein. Insbesondere beim Transport kann sich der Aufsatz dann nicht unbeabsichtigt verschieben oder ganz von der Schale lösen.

Die Durchmesser der Öffnungen sind so bemessen ist, dass in ihnen eingesetzte Pflanztöpfchen mit ihrem Bund auf dem Rand der Öffnungen zur Auflage kommen.

Wenn dann auch die Höhe der Schale so bemessen ist, dass in die Öffnungen eingesetzte Pflanztöpfchen darin in einem Abstand über dem Boden hängend am Rand der Öffnungen zur Auflage oder Anlage kommen, kann sich überschüssiges Gießwasser auf dem Boden der Schale sammeln und bildet einen integrierten Wasserspeicher.

Am Boden kann ein sogenannter Dom in Form eines hohlzylindrischen, nach innen weisenden Fortsatzes vorgesehen ist, dessen Hohlraum durch den Boden hindurchgeht. Damit lässt sich der maximale Pegel eines integrierten Wasserspeichers bestimmen.

Die Öffnungen im deckelartigen Ein- oder Aufsatz weisen vorzugsweise Ausbuchtungen auf, die als Eingriff dienen, so dass das Einsetzen, Herausnehmen und Austauschen der Pflanztöpfchen sehr erleichtert wird.

Der Rand kann eine Umbördelung aufweisen und Einsteckschlitze für Etiketten oder Öffnungen für einen Tragehenkel können daran angeordnet sein.

Am Boden der Schale können Aufstandsfüßchen oder ein Aufstandsring vorgesehen sein.

Wenn im Boden zusätzlich Abflusslöcher vorgesehen sind, wird die Pflanzenschale multifunktional und es kann darin auch normal in herkömmlicher Weise kultiviert werden.

Wenn im Boden der Schale eine Abflussmöglichkeit für überschüssiges Gießwasser vorgesehen ist, ob in form von Abflusslöchern oder in form eines so genannten Domes, sollte zur Vermeidung von Wasserflecken oder sonstigen Störungen eine Untersetzer verwendet werden. Nach der Erfindung kann ein solcher Untersetzer vorteilhaft am Boden durch eine Schnapp- oder Klemmverbindung fixierbar ist.

Dazu können im Boden nach innen weisende Einstülpungen vorgesehen sein, während ein Untersetzer den Einstülpungen entsprechende Zapfen aufweist, die klemmend in die Einstülpungen am Boden passen.

Alternativ kann am Boden eine Rille oder Aussparung vorgesehen sein, in die ein Untersetzer mit seinem Rand klemmend passt.

In die Seitenwand sind vorzugsweise Rippen oder Rillen oder Wellenlinien zur Verstärkung eingeformt.

Auch in der Unterseite des deckelartigen Einsatzes können zwischen den Öffnungen verlaufende Verstärkungsrippen vorgesehen sein.

Eine sinnvolle Ergänzung der Pflanzenschale kann eine abnehmbare Haube sein, mit der die Schale nach oben abgedeckt werden kann. Sie kann dem Schutz der Pflanzen dienen und außerdem ein für die Pflanzen zum Gedeihen und Frischhalten günstiges Klima schaffen. Besonders wenn in der Pflanzenschale mit Sämereien gearbeitet wird, begünstigt das sich unter der Haube bildende Klima das Keimen der Samen.

Wenn die Haube mit Hilfe einer Schnappvorrichtung am oberen Rand der Pflanzenschale fixierbar ist, kann sie einerseits nicht herunterfallen und andererseits bei Bedarf doch mit einem einfachen Handgriff entfernt werden.

Ein Griff oder Eingriffslöcher an der Haube erleichtert die Handhabung. Die Eingriffslöcher können gleichzeitig als Belüftungslöcher dienen, die anderenfalls vorzusehen sind.

Die Erfindung wird im Folgenden anhand der anhängenden Zeichnungen näher beschrieben; es zeigen:
- Fig. 1: die perspektivische Ansicht einer Pflanzenschale mit Einsatz nach der Erfindung,
- Fig. 2: einen Vertikalschnitt durch die Pflanzenschale gemäß Fig. 1,
- Fig. 3: veranschaulicht in einer perspektivischen Ansicht den Verwendungszweck der Pflanzenschale,
- Fig. 4: einen Vertikalschnitt durch eine andere Ausführungsform der Pflanzenschale,
- Fig. 5: die Draufsicht auf einen Einsatz der Pflanzenschale,
- Fig. 6: die Ansicht des Einsatzes gemäß Fig. 5 von unten,
- Fig. 7: die Sicht in eine Pflanzenschale von oben,
- Fig. 8: die Sicht auf die Pflanzenschale von unten,
- Fig. 9: eine Durchsicht durch eine bestückte Pflanzenschale mit Wasserspeicher,
- Fig. 10 und 11: jeweils eine Ausführungsform einer Weiterentwicklung der Pflanzenschale.

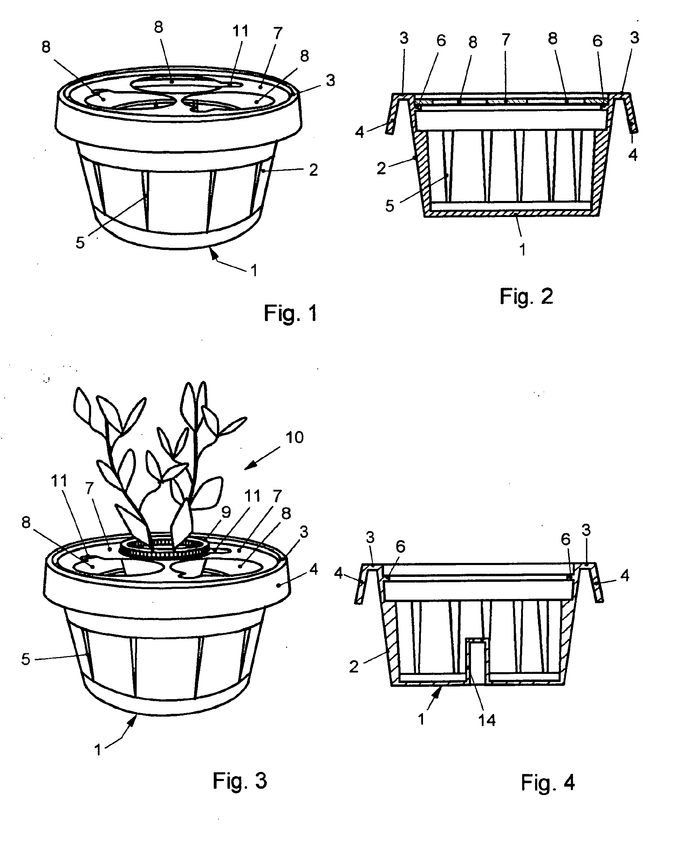

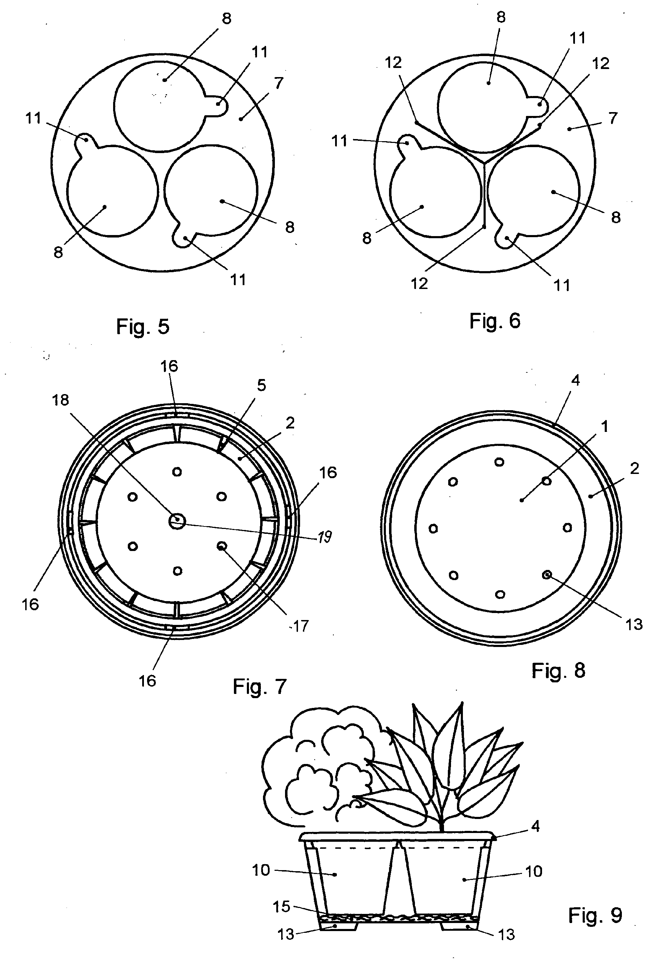

Fig. 1 und Fig. 2 zeigen in einer perspektivischen Ansicht und einem Vertikalschnitt eine bevorzugte Ausführungsform der Pflanzenschale. Sie einen im Vergleich zu den bekannten Pflanzschalen deutlich größeren Boden 1 (siehe auch Fig. 7 und 8), von dem sich die Seitenwand 2 geradlinig und nur wenig von einem rechten Winkel abweichend zum offenen Rand 3 erstreckt der vorzugsweise eine Umbördelung 4 aufweist. Zur Verstärkung der Seitenwand 2 können an ihr beispielsweise vorspringende Rippen 5 oder Rillen vorgesehen sein, auch Wellenlinien und anderes können sich eignen. Auf der Innenseite der Seitenwand 2 ist unterhalb des Randes 3 ein radial nach innen weisender Vorsprung 6 angeformt, der als Auflage 6 für einen deckelartigen Einsatz 7 dient. In diesem Einsatz 7 sind mehrere, im dargestellten Beispiel drei, kreisrunde Öffnungen 8 vorgesehen, deren Durchmesser so bemessen ist, dass ein herkömmliches Pflanztöpfchen, wie sie z.B. beim Angebot diverser Küchenkräuter mit Wurzelballen Verwendung finden, in eine solche Öffnung 8 eingesetzt werden kann und dabei mit seinem normgemäß am oberen Rand befindlichen Bund 9 auf dem Einsatz 7 aufsitzen kann. Dies ist in Fig. 3 in einer perspektivischen Ansicht der Pflanzenschale mit einem eingesetzten Pflanztöpfchen 10 beispielhaft wiedergegeben.

Wie am besten aus den Fig. 5 und 6 zu ersehen ist, können die Öffnungen 8 eine Ausbuchtung 11 als Eingriff 11 aufweisen.

Dies ist erleichtert das Einsetzen und noch mehr die Wiederentnahme oder das Austauschen einzelner Pflanztöpfchen 10 in und aus der Schale.

Fig. 5 zeigt den deckelartigen Einsatz 7 von oben, Fig. 6 zeigt ihn von unten. In Fig. 6 erkennt man auch zwischen den Öffnungen 8 verlaufende Verstärkungsrippen 12 des Einsatzes 7. Der Boden 1 kann gemäß Fig. 8 mit Aufstandsfüßchen 13, z.B. in Form von angeformten Noppen 13 ausgebildet sein.

In dieser neuen Pflanzenschale mit Einsatz 7 können mehrere, im dargestellten Beispiel drei, einzelne Pflanztöpfchen 10, wie sie derzeit vielfach einzeln angeboten werden, nach Themen oder Kochrezepten oder sonstigen Anwendungen kombiniert mit wenigen, raschen Handgriffen arrangiert und so zum Kauf, z.B. als Pasta-Schale oder Barbecue-Schale oder Frühlingsschale usw., angeboten werden, wobei dann keine zusätzliche Pflanzarbeit mit Erde und anderem Zubehör erforderlich ist. Das Arrangement kann auch unmittelbar beim Verkauf nach Wunsch eines Kunden zusammengestellt, ohne dass z.B. jemand mit Erde in Berührung kommen muss. Die Bestückung der Pflanzenschale mit dem gewünschten Sortiment wird rationalisiert und die Richtzeit erheblich verkürzt.

Da die einzelnen Pflanzen in ihrem jeweiligen Pflanztöpfchen 10 verbleiben, in dem sie mit der jeweils bestgeeigneten Erde (z.B. fett oder eher sandig) versorgt sind, können in einer Pflanzenschale auch Pflanzen mit unterschiedlichen Ansprüchen kombiniert werden. Auch mit der richtigen Menge Gießwasser können die einzelnen Pflanzen individuell richtig versorgt werden und so länger frisch und appetitlich bleiben.

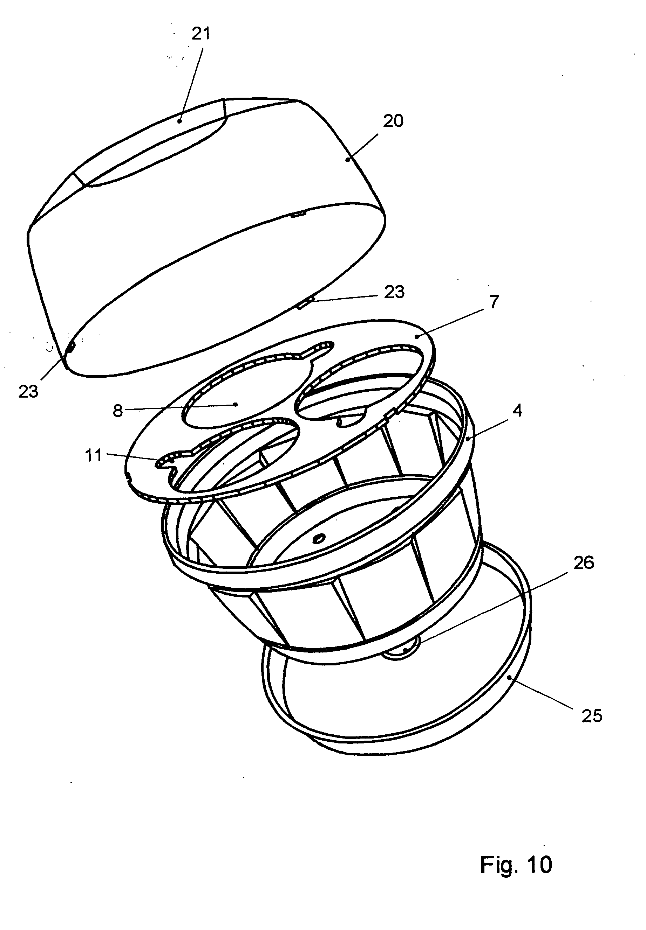

Die einzelnen Pflanztöpfchen 10 kommen mit ihrem Bund 9 zur Auflage auf dem Einsatz 7 bzw. dem die Öffnungen 8 umgebenden festen Rand und können so am Einsatz 7 hängend, d.h. mit Abstand zum Boden 1 in die Pflanzenschale eingebracht werden. Damit wird einem Übergießen der Pflanzen entgegengewirkt, denn überschüssiges Gießwasser kann durch die allgemein bei Pflanztöpfchen 10 vorgesehenen Ablauflöcher abfließen, sich am Boden 1 der Pflanzenschale sammeln und einen von Fall zu Fall durchaus erwünschten integrierten Wasserspeicher 15 bilden (siehe Fig. 10), der zu einem günstiges Klima in der Pflanzenschale beitragen kann. Die Pflege der Pflanzen wird damit erleichtert.

Damit sich auf dem Boden der Pflanzenschale sammelndes, überschüssiges Gießwasser bzw. der erwähnte Wasserspeicher 15 aber einen bestimmten Pegel nicht überschreiten kann, kann nach einer vorteilhaften Fortbildung der Pflanzenschale gemäß Fig. 4 an deren Boden 1 und vorzugsweise in der Bodenmitte ein nach innen ragender sogenannter Dom 14 vorgesehen sein. Ein solcher Dom 14 ist ein nach innen ragender hohlzylindrischer Fortsatz 14, durch den sich auf dem Boden 1 sammelndes, überschüssiges Gießwasser, das die Höhe des Doms 14 überschreitet, nach außen ablaufen kann. In diesem Fall empfiehlt es sich, die Pflanzenschale in einen Untersetzer zu stellen, um Wasserflecken auf einer Unterlage zu vermeiden. Die Höhe des Doms 14 muss nicht von vornherein festgelegt sein. Da als Material für die Schale bevorzugt Kunststoff in Frage kommt, kann dem Dom 14 bei der Herstellung eine maximale Höhe gegeben werden, die dann durch Verkürzen (Abschneiden) an den Verwendungszweck angepasst werden kann. Es lässt sich so die maximale Wasserhöhe im integrierten Wasserspeicher 15 optimal anpassen.

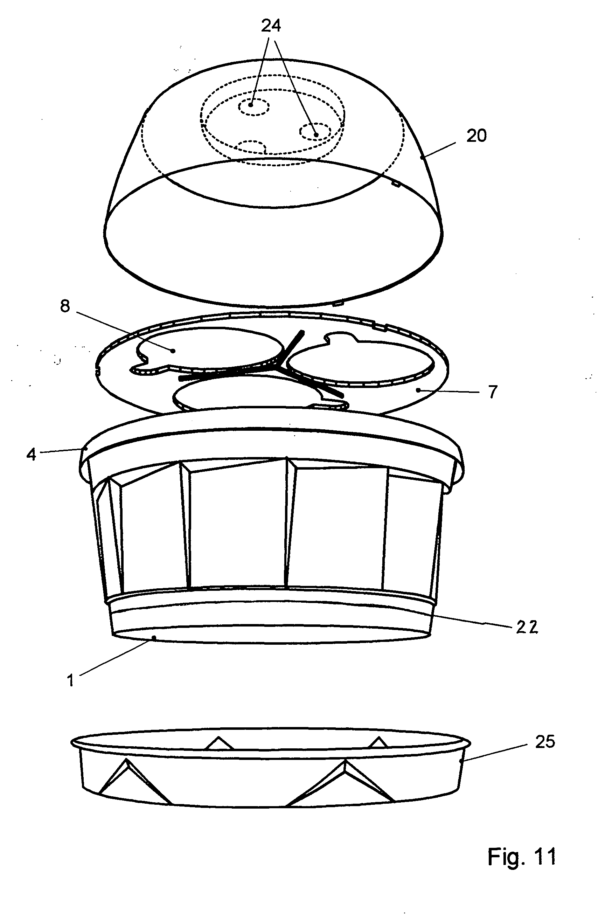

Um Wasserflecken zu vermeiden kann nach einer weiteren Fortbildung der Pflanzenschale in der Außenfläche des Bodens 1 eine Aussparung vorgesehen sein, in die ein Klemm-Untersetzer 25 optional eingeklickt werden kann, der z.B. durch den Dom 14 austretendes Gießwasser aufnehmen kann. Alternativ können dazu im Boden 1 auch mindesten eine oder mehrere nach innen weisende Einstülpung(en) 18 und im Untersetzer 25 entsprechend Zapfen 26 vorgesehen werden (siehe Fig. 10), die in die Einstülpung(en) 18, z.B. mittels in der oder den Einstülpung(en) 18 vorgesehenen Ringrillen 19, einschnappen können. Wenn an Stelle von Aufstandsfüßchen 13 am Boden 1 eine vorstehender Ringrand als Aufstandsfläche am Boden 1 vorgesehen wird, besteht auch die Möglichkeit in der Seitenfläche eines solchen Ringrandes eine oder mehrere Ausnehmungen, z.B. eine Rille 22 (siehe Fig. 11), vorzusehen, in die ein Klemm-Untersetzer (25) mit seinem Rand eingeschnappt werden kann. Pflanzenschale und Klemm-Untersetzer bilden so eine Einheit, die sich leicht und problemlos von einem Platz zu einem anderen umsetzen lässt.

Alternativ zum Dom 14 können im Boden 1 auch ein oder mehrere Abflusslöcher 17 vorgesehen sein. Auch in diesem Fall bildet der Klemm-Untersetzer 25 eine sinnvolle Ergänzung. Die Pflanzenschale wird damit multifunktional; alternativ zu dem hier beschriebenen Verwendungszweck kann in ihr dann auch normal (mit Erde) kultiviert werden.

Bevorzugt kann der Rand 3 der Pflanzenschale ausreichend, z.B. 15mm, breit ausgebildet sein, dass Einsteckschlitze 16 für Einstecketiketten vorgesehen werden können. Auch Öffnungen für einen Tragegriff können in einem so verbreiterten Rand 3 vorgesehen sein.

Eine weitere sinnvolle Fortbildung der beschriebenen Pflanzenschale wird mit einer Haube 20 (siehe Fig. 10 und 11) erreicht, die von oben auf die Pflanzenschale gestülpt oder aufgesetzt werden kann und bevorzugt mit einem Griff 21 oder Eingriffslöchern 24 versehen ist, um die Handhabung zu erleichtern. Die Eingriffslöcher 24 können gleichzeitig zur Belüftung dienen. Am unteren Rand der Haube 20 kann eine Schnappvorrichtung 23, z.B. in form von federnden Laschen 23; angeordnet sein, mit der die Haube 20 am Rand der Pflanzenschale einschnappen kann, damit die Haube 20 einerseits nicht herunterfallen, andererseits aber mit einem einfachen Handgriff bei Bedarf leicht abgenommen werden kann. Die Haube 20 schützt die in der Pflanzenschale arrangierten Pflanzen und schafft für sie ein günstiges Klima fürs Gedeihen und Frischhalten. Besonders günstig wirkt sich dies aus, wenn mit Sämereien in der Pflanzenschale gearbeitet wird; das sich unter der Haube bildende Klima begünstigt den Keimvorgang der Samen.

Pflanzenschalen nach der Erfindung können in unterschiedlichen Größen, angepasst an den Zweck ihres Einsatzes hergestellt werden. Der Durchmesser der Schale über alles kann vorzugsweise 20cm bis 50cm mit den passenden Einsätzen 7 betragen. Die Anzahl der Öffnungen 8 im Einsatz 7 kann von 2 bis 10 variieren, deren Durchmesser 5cm bis 15cm betragen.

Als Material für die Pflanzenschale kommt vor allem Kunststoff in Betracht, andere Materialien z.B. Ton, Keramik usw. kommen aber ebenso in Frage.

Die Pflanzenschale ist zunächst vorzugsweise für das Arrangieren von Küchen- bzw. Würzkräutern z.B. entsprechend Speiserezepten gedacht. Selbstverständlich können auch alle anderen Arten von Pflanzen arrangiert werden, z.B. Schmuckpflanzen nach Themen wie Geburtstagsschale, Frühlingsschale usw.

### Bezugszeichenliste

- 1: Boden
- 2: Seitenwand
- 3: Rand
- 4: Umbördelung
- 5: Rippen
- 6: Vorsprung / Auflage
- 7: Einsatz
- 8: Öffnungen
- 9: Bund
- 10: Pflanztöpfchen
- 11: Ausbuchtung / Eingriff
- 12: Verstärkungsrippen
- 13: Aufstandsfüßchen / Noppen
- 14: Dom
- 15: Wasserspeicher
- 16: Einsteckschlitze
- 17: Abflusslöcher
- 18: Einstülpung
- 19: Ringrillen
- 20: Haube
- 21: Griff
- 22: Rille
- 23: Schnappverschluss
- 24: Eingriffslöcher
- 25: Klemm-Untersetzer
- 26: Zapfen

## Patentansprüche

1. Pflanzenschale zur Aufnahme von mehr als einer Pflanze, **gekennzeichnet durch** eine Seitenwand (2), die sich vom Boden (1) der Pflanzschale geradlinig zu ihrem offenen Rand (3) erstreckt und **durch** einen deckelartigen Ein- oder Aufsatz (7), der nahe beim Rand (3) gehalten ist und in dem mehrere (mehr als eine) Öffnungen (8) vorgesehen sind, deren Durchmesser zur Aufnahme jeweils eines Pflanztöpfchens (10) bemessen ist.

2. Pflanzenschale nach Anspruch 1, **dadurch gekennzeichnet, dass** die Seitenwand (2) sich rechtwinklig oder in einem vom rechten Winkel nur geringfügig nach außen gerichteten Winkel zum offenen Rand (3) erstreckt.

3. Pflanzenschale nach Anspruch 1, **dadurch gekennzeichnet, dass** unterhalb des Randes (3) ein nach innen weisender Vorsprung (6) vorgesehen ist, der als Auflage (6) für den deckelartigen Einsatz (7) dient.

4. Pflanzenschale nach Anspruch 1, **dadurch gekennzeichnet, dass** der deckelartige Aufsatz (7) auf dem Rand (3) aufliegt und durch eine Schnappverbindung am Rand (3) fixierbar ist.

5. Pflanzenschale nach Anspruch 1, **dadurch gekennzeichnet, dass** die Durchmesser der Öffnungen (8) so bemessen sind, dass in ihnen eingesetzte Pflanztöpfchen (10) mit ihrem Bund (9) auf dem Rand der Öffnungen (8) zur Auflage kommen.

6. Pflanzenschale nach Anspruch 1, **dadurch gekennzeichnet, dass** die Höhe der Schale so bemessen ist, dass in die Öffnungen (8) eingesetzte Pflanztöpfchen (10) in einem Abstand über dem Boden (1) hängend am Rand der Öffnungen (8) zur Auflage oder Anlage kommen.

7. Pflanzenschale nach Anspruch 1, **dadurch gekennzeichnet, dass** am Boden (1) ein sogenannter Dom (14) in Form eines hohlzylindrischen, nach innen weisenden Fortsatzes vorgesehen ist, dessen Hohlraum durch den Boden (1) hindurchgeht.

8. Pflanzenschale nach Anspruch 1, **dadurch gekennzeichnet, dass** die Öffnungen (8) Ausbuchtungen (11) als Eingriff aufweisen.

9. Pflanzenschale nach Anspruch 1, **dadurch gekennzeichnet, dass** der Rand (3) eine Umbördelung (4) aufweist und Einsteckschlitze (16) für Etiketten und/oder Öffnungen für einen Tragehenkel angeordnet sind.

10. Pflanzenschale nach Anspruch 1, **dadurch gekennzeichnet, dass** am Boden (1) Aufstandsfüßchen (13) vorgesehen sind.

11. Pflanzenschale nach Anspruch 1, **dadurch gekennzeichnet, dass** am Boden (1) ein Aufstandsring vorgesehen ist.

12. Pflanzenschale nach Anspruch 1, **dadurch gekennzeichnet, dass** im Boden (1) Abflusslöcher vorgesehen sind.

13. Pflanzenschale nach Anspruch 1, **dadurch gekennzeichnet, dass** ein Untersetzer (25) am Boden (1) durch eine Schnapp- oder Klemmverbindung fixierbar ist.

14. Pflanzenschale nach Anspruch 1, **dadurch gekennzeichnet, dass** im Boden (1) eine oder mehrere, nach innen weisende Einstülpungen (18) vorgesehen sind und ein Untersetzer (25) den Einstülpung(en) (18) entsprechende Zapfen (26) aufweist, die klemmend in die Einstülpung(en) (18) am Boden (1) passen.

15. Pflanzenschale nach Anspruch 14, **dadurch gekennzeichnet, dass** in der oder den Einstülpung(en) (18) des Schalenbodens (1) und an dem oder den Zapfen (26) des Untersetzers Ringrillen (19) vorgesehen sind.

16. Pflanzenschale nach Anspruch 1, **dadurch gekennzeichnet, dass** am Boden (1) eine Rille (22) vorgesehen ist, in die ein Untersetzer (25) mit seinem Rand klemmend passt.

17. Pflanzenschale nach Anspruch 1, **dadurch gekennzeichnet, dass** in die Seitenwand (2) Rippen (5) oder Rillen oder Wellenlinien zur Verstärkung eingeformt sind.

18. Pflanzenschale nach Anspruch 1, **dadurch gekennzeichnet, dass** in der Unterseite des deckelartigen Einsatzes (7) zwischen den Öffnungen (8) verlaufende Verstärkungsrippen (12) vorgesehen sind.

19. Pflanzenschale nach Anspruch 1, **gekennzeichnet durch** eine abnehmbare Haube (20).

20. Pflanzenschale nach Anspruch 19, **dadurch gekennzeichnet, dass** die Haube (20) mit Hilfe einer Schnappvorrichtung (23) am oberen Rand der Pflanzenschale fixierbar ist.

21. Pflanzenschale nach Anspruch 19, **dadurch gekennzeichnet, dass** die Haube (20) einen Griff (21) oder Eingriffslöcher (24) aufweist.

22. Pflanzenschale nach Anspruch 19, **dadurch gekennzeichnet, dass** in der Haube (20) Belüftungslöcher vorgesehen sind.
